# DEMANDE DE BREVET EUROPEEN

(11) **EP 4 678 534 A1**
(43) Date de publication de la demande: **14.01.2026**
(21) Numéro de dépôt: 25186328.8
(22) Date de dépôt: 30.06.2025
(51) Int. Cl.: B64D 27/18, B64D 27/40, B64D 29/02, B64D 29/06, B64D 29/08

(54) **MÂT D'AÉRONEF COMPRENANT UN CAPOT ARRIÈRE MOBILE AINSI QU AU MOINS UN SYSTÈME DE VERROUILLAGE POUR MAINTENIR LE CAPOT DANS UN ÉTAT FERMÉ**

(30) Priorité: 11.07.2024 FR 2407576
(71) Demandeur: AIRBUS OPERATIONS (S.A.S.), 31060 Toulouse (FR)
(72) Inventeur: PUECH, Jacky, 31060 TOULOUSE (FR); CRUAUD-PRIEUR, Solène, 31060 TOULOUSE (FR); FIRMIGNAC, Thomas, 31060 TOULOUSE (FR); POUSSOU, Fabien, 31060 TOULOUSE (FR); NENY, Jérôme, 31060 TOULOUSE (FR)
(74) Mandataire: Fantin, Laurent

(57) **Abrégé**

L'invention a pour objet un mât d'aéronef reliant un ensemble de propulsion et une voilure (42), ledit mât comprenant une structure fixe, un carénage amont (44) ainsi qu'un capot aval (46) mobile entre un état fermé dans lequel il est en contact avec la voilure (42) et dans le prolongement du carénage amont (44) et un état ouvert dans lequel le capot aval (46) est distant de la voilure (42). En complément, le mât comporte au moins un système de verrouillage (58) configuré pour occuper un état verrouillé dans lequel le capot aval (46) est maintenu à l'état fermé et un état déverrouillé dans lequel le capot aval (46) peut passer de l'état fermé à l'état ouvert.

Cette solution permet de rendre accessible un système d'attache voilure arrière et plus largement tout équipement situé à l'arrière du mât tout en limitant le temps d'immobilisation de l'aéronef.

## Description

La présente demande se rapporte à un mât d'aéronef comprenant un capot arrière mobile ainsi qu'au moins un système de verrouillage pour maintenir le capot arrière dans un état fermé.

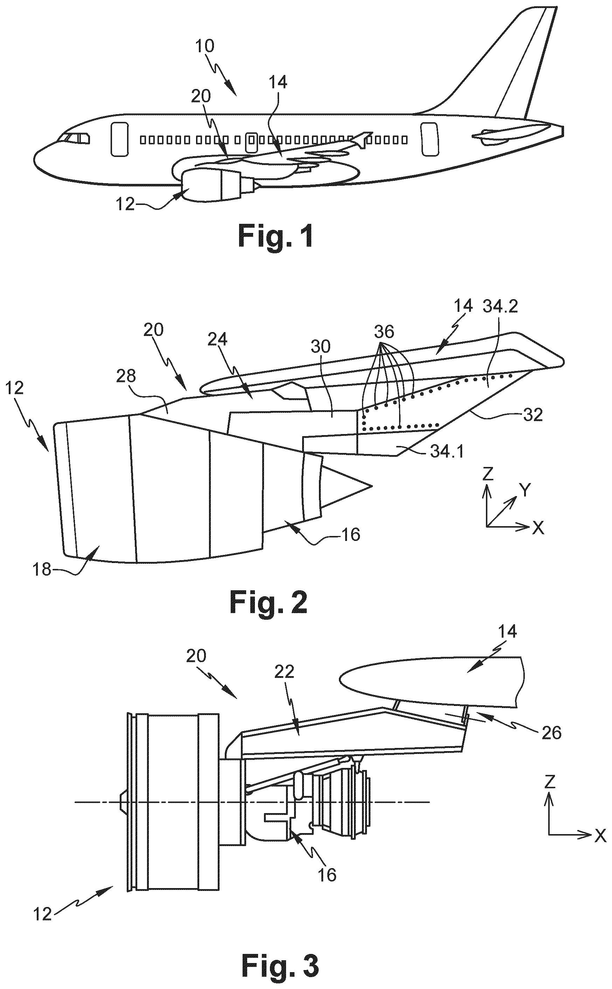

Selon un mode de réalisation visible sur les figures 1 à 3, un aéronef 10 comprend plusieurs ensembles de propulsion 12 positionnés sous sa voilure 14. Un ensemble de propulsion 12 comprend un moteur 16, une nacelle 18 (non représentée sur la figure 3) positionnée autour du moteur 16 de manière à délimiter avec ce dernier un conduit annulaire, ainsi qu'un mât 20 reliant le moteur 16 et la voilure 14.

Pour la présente demande, une direction longitudinale X est parallèle à l'axe du moteur 16. Une direction transversale horizontale Y est perpendiculaire à l'axe du moteur 16 et horizontale. Une direction verticale Z est perpendiculaire aux directions X et Y. Un plan transversal YZ est perpendiculaire à la direction longitudinale X. Un plan médian vertical est un plan vertical contenant l'axe du moteur 16.

Les termes avant/amont et arrière/aval font référence au sens d'écoulement des flux d'air dans le moteur 16 en fonctionnement, les flux d'air s'écoulant dans le moteur 16 de l'avant vers l'arrière. Les termes supérieur et inférieur font référence à une position selon la direction verticale Z, un élément supérieur étant plus écarté du sol qu'un élément inférieur lorsque l'aéronef 10 est au sol.

Le mât 20 comprend une structure primaire rigide 22, qui assure entre autres la transmission des efforts entre le moteur 16 et la voilure 14, et une structure secondaire 24 qui enveloppe la structure primaire et limite la traînée du mât 20.

Le mât 20 comprend, entre autres, un système d'attache voilure arrière 26 reliant la voilure 14 et la structure primaire rigide 22, positionné à l'arrière de cette dernière.

La structure secondaire 24 comprend un carénage avant 28 positionné à l'avant de la voilure 14, deux carénages centraux 30 de part et d'autre du mât 20, positionnés sous la voilure 14 et approximativement au droit de la nacelle 18, ainsi que des carénages arrière qui forment un bord de fuite 32, dont un carénage arrière inférieur 34.1 ou APF (« Aft Pylon Fairing » en anglais), positionné à l'arrière de la nacelle 18 dans le prolongement du flux d'air sortant du moteur 16 et un carénage arrière supérieur 34.2 situé au-dessus du carénage arrière inférieur 34.1 et jouxtant la voilure 14.

Ce carénage arrière supérieur 34.2 est relié à la structure primaire rigide 22 et/ou aux autres carénages par des éléments de liaison 36, comme des vis ou des écrous par exemple, positionnés sur toute sa périphérie.

Pour accéder au système d'attache voilure arrière 26, il est nécessaire de démonter le carénage arrière supérieur 34.2. Compte tenu du grand nombre d'éléments de liaison 36, les opérations de montage et démontage sont relativement longues, ce qui tend à augmenter le temps d'immobilisation de l'aéronef.

La présente invention vise à remédier à tout ou partie des inconvénients de l'art antérieur.

A cet effet, l'invention a pour objet un mât d'aéronef comprenant au moins une voilure, au moins un ensemble de propulsion ainsi qu'au moins un mât reliant l'ensemble de propulsion et la voilure, ledit mât comprenant une structure fixe, un carénage amont ainsi qu'un capot aval décalé vers l'arrière selon une direction longitudinale par rapport au carénage amont.

Selon l'invention, le capot aval est mobile et le mât comprend :
- au moins une articulation reliant le capot aval et la structure et permettant au capot aval d'occuper un état fermé dans lequel le capot aval est en contact avec la voilure et dans le prolongement du carénage amont ainsi qu'un état ouvert dans lequel le capot aval est distant de la voilure, ladite articulation présentant au moins un axe de pivotement parallèle à une direction transversale et horizontale,
- au moins un système de verrouillage configuré pour occuper un état verrouillé dans lequel le capot aval est maintenu à l'état fermé et un état déverrouillé dans lequel le capot aval peut passer de l'état fermé à l'état ouvert.

En complément, chaque articulation comprend une tige cylindrique formant l'axe de pivotement ainsi qu'une glissière le long de laquelle coulisse la tige cylindrique entre des première et deuxième extrémités, la tige cylindrique étant positionnée au niveau ou proche de la première extrémité de la glissière lorsque le capot aval est à l'état fermé et au niveau ou proche de la deuxième extrémité de la glissière lorsque le capot aval est à l'état ouvert.

Cette solution permet d'accéder à un système d'attache voilure arrière et plus largement à tout équipement du mât accessible lorsque le capot aval est à l'état ouvert tout en limitant le temps d'immobilisation de l'aéronef.

Selon une autre caractéristique, la deuxième extrémité est décalée vers le bas et/ou vers l'arrière par rapport à la première extrémité.

Selon une autre caractéristique, la liaison capot comprend deux articulations symétriques par rapport à un plan médian vertical.

Selon une autre caractéristique, le système de verrouillage comprend une liaison glissière, solidaire de la voilure et/ou de la structure, orientée approximativement selon la direction longitudinale ainsi qu'une canne qui comporte une première extrémité se translatant le long de la liaison glissière et une deuxième extrémité pourvue d'un crochet. En complément, le capot aval comprend un point d'ancrage configuré pour coopérer avec le crochet.

Selon une autre caractéristique, la liaison glissière comprend un support solidaire de la voilure et/ou de la structure, une vis sans fin, au moins une liaison pivotante reliant la vis sans fin et le support, une noix configurée pour se visser sur la vis sans fin ainsi qu'une articulation reliant la noix et la première extrémité de la canne.

Selon une autre caractéristique, la vis sans fin présente une extrémité arrière. En complément, le système de verrouillage comprend une commande pour contrôler la liaison glissière, positionnée au niveau de l'extrémité arrière de la vis sans fin, le capot aval comprenant un orifice au droit de la commande lorsque le capot aval est à l'état fermé.

Selon une autre caractéristique, l'aéronef comprend au moins un joint d'étanchéité configuré pour être comprimé entre le capot aval et la voilure lorsque le capot aval est à l'état fermé.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble de propulsion illustrant un mode de réalisation de l'art antérieur,
- La figure 3 est une vue latérale de l'ensemble de propulsion visible sur la figure 2, sans nacelle, ni carénages,
- La figure 4 est une coupe longitudinale d'un capot arrière supérieur d'un mât d'aéronef illustrant un premier mode de réalisation de l'invention, dans un état fermé,
- La figure 5 est une coupe longitudinale du capot arrière supérieur visible sur la figure 4, dans un état ouvert,
- La figure 6 est une vue arrière du capot arrière supérieur visible sur la figure 4,
- La figure 7 est une vue latérale d'une commande d'un système de verrouillage illustrant un mode de réalisation de l'invention,
- La figure 8 est une vue en perspective depuis l'extérieur d'un capot arrière supérieur illustrant un mode de réalisation,
- La figure 9 est une vue en perspective depuis l'intérieur du capot arrière supérieur visible sur la figure 8,
- La figure 10 est une vue en perspective d'une partie d'une liaison capot.

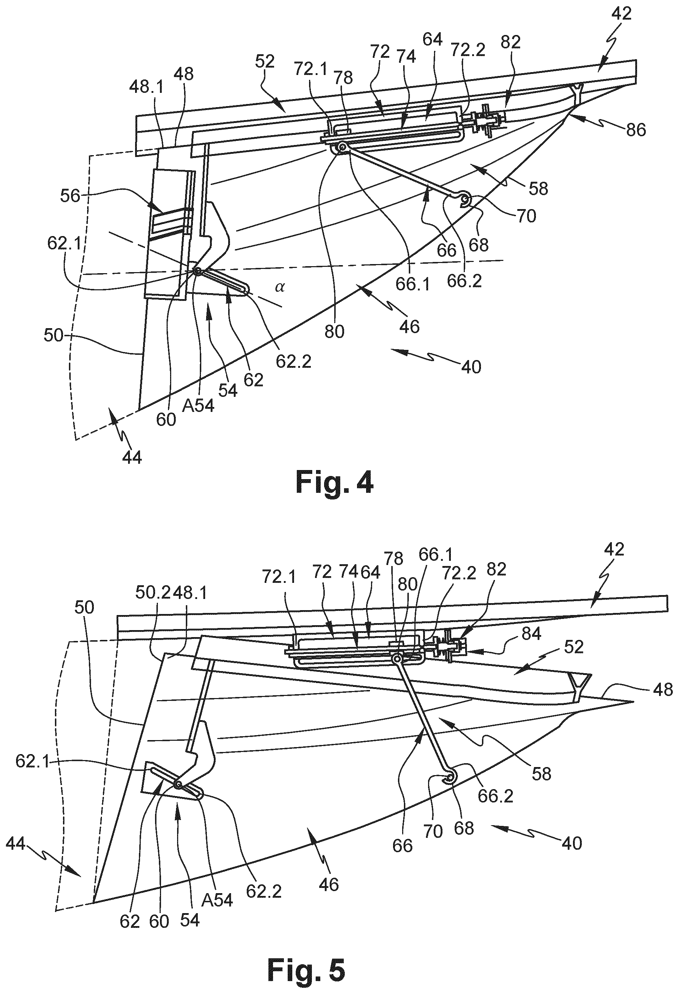

Selon un mode de réalisation visible sur les figures 4 et 5, un aéronef comprend au moins un mât 40 reliant un ensemble de propulsion (non représenté) à une voilure 42.

Selon une particularité de l'invention, le mât 40 comprend un carénage amont 44 fixe, ainsi qu'un capot aval supérieur 46, positionné généralement au-dessus d'un carénage arrière inférieur ou APF (« Aft Pylon Fairing » en anglais), ledit capot aval supérieur 46 étant mobile entre un état fermé (visible sur la figure 4) dans lequel le capot aval supérieur 46 est en contact avec la voilure 42 et positionné dans la continuité du carénage amont 44 ainsi qu'un état ouvert (visible sur la figure 5) dans lequel le capot aval supérieur 46 est distant de la voilure 42. A l'état ouvert, le capot aval supérieur 46 est suffisamment écarté de la voilure 42 pour permettre d'accéder à un système d'attache voilure arrière reliant une structure primaire du mât et la voilure 42.

Selon une configuration, le capot aval supérieur 46 présente une forme de gouttière et comprend un bord supérieur 48 en contact avec la voilure 42 lorsque le capot aval supérieur 46 est à l'état fermé ainsi qu'un bord avant 50 en contact avec le carénage amont 44 lorsque le capot aval supérieur 46 est à l'état fermé. Selon un agencement, le bord supérieur 48 présente une forme en U qui s'étend entre des première et deuxième extrémités 48.1, 48.2. Le bord avant 50 comporte des première et deuxième extrémités 50.1, 50.2 reliées respectivement aux première et deuxième extrémités 48.1, 48.2 du bord supérieur 48.

Selon un mode de réalisation, le capot aval supérieur 46 comprend au moins un joint d'étanchéité 52 qui s'étend au moins sur une partie du bord supérieur 48. Le bord avant 50 est configuré pour coopérer avec le carénage amont 44 de manière à limiter les perturbations aérodynamiques lorsque le capot aval supérieur 46 est à l'état fermé. A titre d'exemple, le bord avant 50 comprend un soyage lui permettant de s'emboîter à l'intérieur du carénage amont 44.

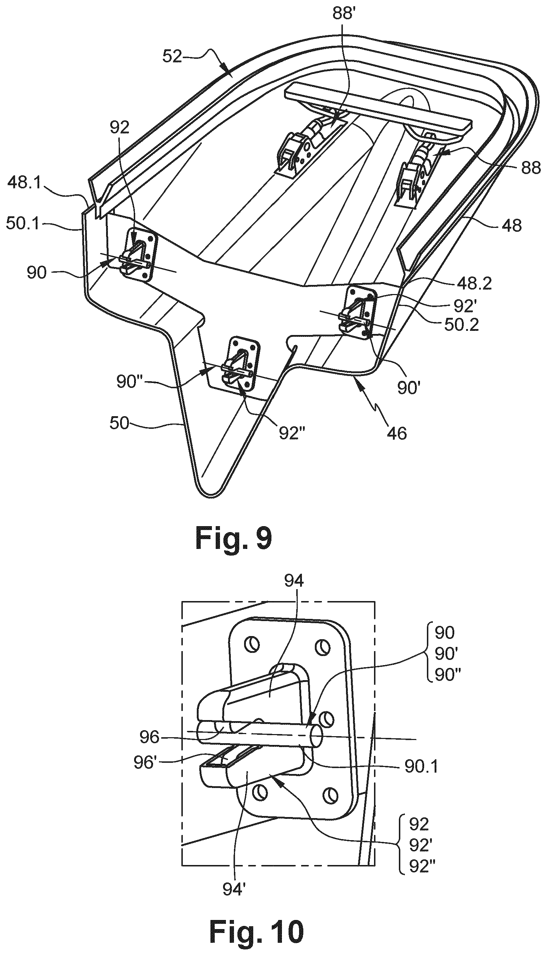

Bien entendu, l'invention n'est pas limitée à cette géométrie ou à ce mode de réalisation pour le capot aval supérieur 46. Quel que soit le mode de réalisation, le joint d'étanchéité 52 est configuré pour être comprimé entre le capot aval supérieur 46 et la voilure 42 lorsque le capot aval supérieur 46 est à l'état fermé. Selon un agencement privilégié, ce joint d'étanchéité 52 est solidaire du capot aval supérieur 46. A titre d'exemple, le joint d'étanchéité 52 présente une section en Y (visible sur la figure 9), la jambe de la section en Y étant reliée au capot aval supérieur 46, les branches de la section en Y s'évasant en direction de la voilure 42. Le joint d'étanchéité 52 peut être continu ou comprendre plusieurs tronçons indépendants mis bout à bout.

Selon un mode de réalisation visible sur les figures 4 à 7, le mât 40 comprend une liaison capot reliant le capot aval supérieur 46 à une structure 56 fixe du mât 40 et qui comporte au moins une articulation 54 reliant le capot aval supérieur 46 et la structure 56 du mât. Chaque articulation 54 présente au moins un axe de pivotement A54 parallèle à la direction transversale et horizontale Y et permet au capot aval supérieur 46 de pivoter de l'état fermé à l'état ouvert et inversement.

En complément, le mât 40 comprend au moins un système de verrouillage 58 configuré pour occuper un état verrouillé dans lequel le système de verrouillage 58 maintient le capot aval supérieur 46 à l'état fermé et un état déverrouillé dans lequel le système de verrouillage 58 permet au capot aval supérieur 46 de passer de l'état fermé à l'état ouvert.

Selon un mode de réalisation privilégié, la liaison capot comprend deux articulations 54, symétriques par rapport au plan médian vertical, qui présentent des axes de pivotement A54 confondus.

Selon une configuration, chaque articulation 54 comprend une tige cylindrique 60 qui forme l'axe de pivotement A54 ainsi qu'une glissière 62 le long de laquelle coulisse la tige cylindrique 60. Cette glissière 62 comprend une lumière qui s'étend entre des première et deuxième extrémités 62.1, 62.2 et dans laquelle peut pivoter et se translater la tige cylindrique 60. Cette glissière 62 est configurée de manière à ce que la tige cylindrique 60 soit positionnée au niveau ou proche de la première extrémité 62.1 de la glissière 62 lorsque le capot aval supérieur 46 est à l'état fermé et au niveau ou proche de la deuxième extrémité 62.2 de la glissière 62 lorsque le capot aval supérieur 46 est à l'état ouvert. La deuxième extrémité 62.2 est décalée vers le bas par rapport à la première extrémité 62.1 de sorte que lorsque le système de verrouillage 58 est ou passe à l'état déverrouillé, la tige cylindrique 60 coulisse par gravité automatiquement de la première extrémité 62.1 vers la deuxième extrémité 62.2 de la glissière 62. Cette solution permet d'augmenter l'écartement entre le capot aval supérieur 46 et la voilure 42 lors de son ouverture.

Selon un agencement, la deuxième extrémité 62.2 de la glissière est décalée vers l'arrière par rapport à la première extrémité 62.1 de sorte que lors du coulissement de la tige cylindrique 60 vers la deuxième extrémité 62.2 de la glissière 62 le capot aval supérieur 46 s'écarte du carénage amont 44.

Chaque glissière 62 est positionnée dans un plan longitudinal vertical et forme un angle α compris entre 0 et 50°, de préférence de l'ordre de 30°, avec un plan longitudinal horizontal. Selon une configuration, la glissière 62 est solidaire de la structure 56 du mât. En complément, la tige cylindrique 60 est solidaire du capot aval supérieur 46.

Bien entendu, l'invention n'est pas limitée au mode de réalisation visible sur les figures 4 et 5 pour l'articulation 54.

Selon une configuration visible sur les figures 4 à 7, le mât comprend un unique système de verrouillage 58 positionné au niveau du plan médian vertical.

Selon un mode de réalisation, le système de verrouillage 58 comprend une liaison glissière 64, solidaire de la voilure 42 et/ou de la structure 56 du mât 40, orientée approximativement selon la direction longitudinale X ainsi qu'une canne 66 qui comporte une première extrémité 66.1 se translatant le long de la liaison glissière 64 et une deuxième extrémité 66.2 pourvue d'un crochet 68.

En complément, le capot aval supérieur 46 comprend un point d'ancrage 70 configuré pour coopérer avec le crochet 68. Lorsque le crochet 68 coopère avec le point d'ancrage 70 du capot aval supérieur 46, ce dernier est suspendu au crochet 68.

Selon une configuration, la liaison glissière 64 comprend un support 72 solidaire de la voilure 42 et/ou de la structure 56 du mât 40, une vis sans fin 74, au moins une liaison pivotante 76 reliant la vis sans fin 74 et le support 72, une noix 78 configurée pour se visser sur la vis sans fin 74 ainsi qu'une articulation 80 reliant la noix 78 et la première extrémité 66.1 de la canne 66. Selon un agencement, l'articulation 80 est une liaison pivotante et présente un axe de pivotement transversal et horizontal.

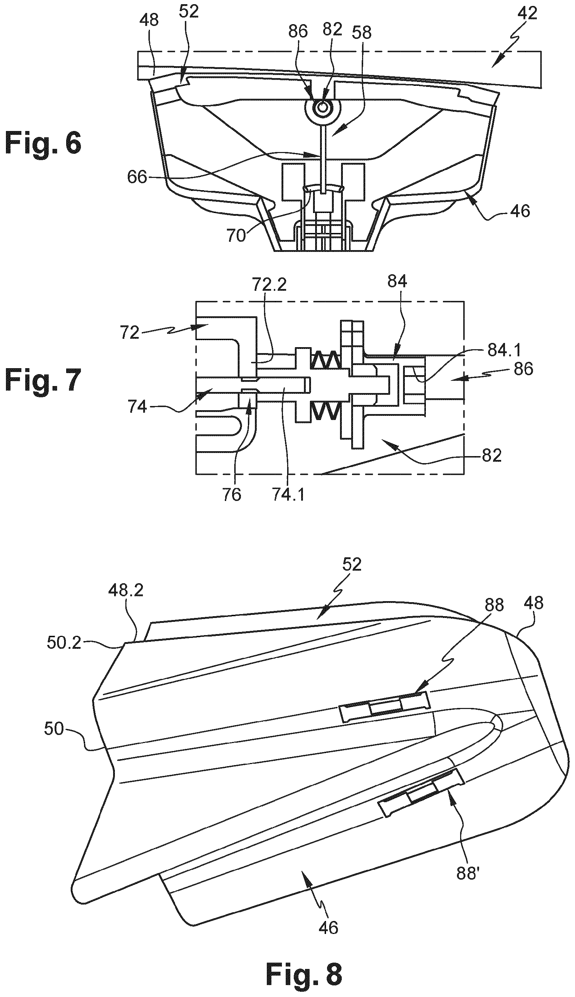

Selon un mode de réalisation, le support 72 comprend des première et deuxième portées 72.1, 72.2 configurées pour former avec la vis sans fin 74 la première liaison pivotante 74. La noix 78 peut se déplacer le long de la vis sans fin 74 entre une position avant lorsque la noix 78 est en contact ou proche de la première portée 72.1 et une position arrière lorsque la noix 78 est en contact ou proche de la deuxième portée 72.2. Comme illustré sur la figure 7, la vis sans fin 74 présente une extrémité arrière 74.1 en saillie vers l'arrière par rapport à la deuxième portée 72.2.

La liaison glissière 64, la canne 66 et le point d'ancrage 70 sont configurés de manière à ce que la noix 78 soit positionnée dans la position avant lorsque le capot aval supérieur 46 est à l'état fermé. Lorsque la noix 78 passe de la position avant vers la position arrière, la première extrémité 66.1 de la canne 66 se translate vers l'arrière et la canne 66 pivote, ce qui permet au capot aval supérieur 46 de s'écarter de la voilure 42 et du carénage amont 44, comme illustré sur la figure 5. Si l'accès n'est pas suffisant, le crochet 68 est détaché du point d'ancrage 70 du capot aval supérieur 46 qui peut alors pivoter autour de l'axe de pivotement A54 des articulations 54.

Le système de verrouillage 58 comprend une commande 82 pour contrôler la liaison glissière 64, plus particulièrement le pivotement de la vis sans fin 74. Cette commande 82 est positionnée au niveau de l'extrémité arrière 74.1 de la vis sans fin 74. Selon un mode de réalisation, cette commande 82 comprend une tête 84 accouplée avec la vis sans fin 74, qui présente une empreinte 84.1, comme une empreinte 84.1 avec une section transversale hexagonale par exemple. Cette empreinte 84.1 est configurée pour coopérer avec un outil adapté pour faire pivoter la tête 84 et la vis sans fin 74. Comme illustré sur la figure 6, le capot aval supérieur 46 comprend un orifice 86 au droit de la commande 82 lorsque le capot aval supérieur 46 est à l'état fermé permettant à l'outil d'accéder à la tête 84 pour faire pivoter la vis sans fin 74 lorsque le capot aval supérieur 46 est à l'état fermé.

Bien entendu, l'invention n'est pas limitée à ce mode de réalisation pour le système de verrouillage 58 et sa commande 82.

Selon un autre mode de réalisation visible sur les figures 8 et 9, le système de verrouillage 58 comprend au moins un mécanisme de verrouillage de type latch 88, comme décrit dans le document EP1907654. Selon un agencement, le système de verrouillage 58 comprend deux mécanismes de verrouillage de type latch 88, 88' positionnés de manière symétrique par rapport au plan médian vertical.

Quel que soit le mode de réalisation, le système de verrouillage 58 est configuré pour comprimer le joint d'étanchéité 52 entre le capot aval supérieur 46 et la voilure 42 lorsqu'il passe de l'état déverrouillé à l'état verrouillé.

Selon un autre mode de réalisation visible sur les figures 9 et 10, la liaison capot reliant le capot 46 au mât 40 comprend au moins un système d'ancrage 90 solidaire d'un premier élément parmi le capot aval supérieur 46 et la structure 56 du mât ainsi qu'au moins un système d'accroche 92 configuré pour coopérer avec le système d'ancrage 90, solidaire d'un deuxième élément différent du premier élément parmi le capot aval supérieur 46 et la structure 56.

Le système d'ancrage 90 comprend une tige cylindrique 90.1, orientée parallèlement à la direction transversale et horizontale Y, qui peut former un axe de pivotement. Le système d'accroche 92 comprend deux branches fixes 94, 94' orientées approximativement selon la direction longitudinale, formant un Vé positionné dans un plan longitudinal vertical et configuré pour recevoir la tige cylindrique 90.1 du système d'ancrage 90 ainsi que deux mors 96, 96', un pour chaque branche fixe 94, 94', mobiles entre une position rétractée dans laquelle les mors 96, 96' permettent l'insertion de la tige cylindrique 90.1 du système d'ancrage 90 entre les branches fixes 94, 94' et une position en saillie dans laquelle les mors 96, 96' maintiennent la tige cylindrique 90.1 du système d'ancrage 90 entre les branches fixes 94, 94'. En variante, le système d'accrochage peut ne comprendre qu'un mors solidaire d'une des branches fixes.

Selon une configuration, le système d'ancrage 90 est solidaire de la structure 56 du mât 40. En complément, le système d'accrochage 92 est solidaire du capot aval supérieur 46.

Selon un agencement, la liaison capot comprend des premier, deuxième et troisième systèmes d'accrochage 92, 92', 92" coopérant respectivement avec des premier, deuxième et troisième systèmes d'ancrage 90, 90', 90". Les premiers systèmes d'ancrage et d'accrochage 90, 92 sont positionnés au niveau du plan médian vertical, les deuxièmes systèmes d'ancrage et d'accrochage 90', 92' ainsi que les troisièmes systèmes d'ancrage et d'accrochage 90", 92" étant positionnés de manière symétrique par rapport au plan médian vertical, décalés vers le haut par rapport aux premiers systèmes d'ancrage et d'accrochage 90, 92. Les deuxième et troisième systèmes d'accrochage 92', 92" peuvent être détachés des deuxième et troisième systèmes d'ancrage 90', 90" préalablement au premier système d'accrochage 92.

Selon ce mode de réalisation, les trois systèmes d'accrochage 92, 92', 92" peuvent être détachés des trois systèmes d'ancrage 90, 90', 90" si bien que le capot aval supérieur 46 peut être détaché de la structure 56 du mât et/ou du carénage amont 44.

Bien entendu, l'invention n'est pas limitée aux modes de réalisation précédemment décrit pour la liaison capot. Quel que soit le mode de réalisation, le mât comprend une structure 56 fixe, un carénage amont 44, un capot aval 46 décalé vers l'arrière selon une direction longitudinale par rapport au carénage amont 44, au moins une liaison capot reliant le capot aval 46 et la structure 56 et permettant au capot aval 46 d'occuper un état fermé dans lequel le capot aval 46 est en contact avec la voilure 42 et prolonge le carénage amont 44 ainsi qu'un état ouvert dans lequel le capot aval 46 est distant de la voilure 42, ainsi qu'au moins un système de verrouillage 58 configuré pour occuper un état verrouillé dans lequel le capot aval 46 est maintenu à l'état fermé et un état déverrouillé dans lequel le capot aval 46 peut passer de l'état fermé à l'état ouvert.

Cette solution permet d'accéder à un système d'attache voilure arrière et plus largement à tout équipement du mât accessible lorsque le capot aval 46 est à l'état ouvert

## Revendications

1. Aéronef comprenant au moins une voilure (42), au moins un ensemble de propulsion ainsi qu'au moins un mât reliant l'ensemble de propulsion et la voilure (42), ledit mât comprenant une structure (56) fixe, un carénage amont (44) ainsi qu'un capot aval (46) décalé vers l'arrière selon une direction longitudinale par rapport au carénage amont (44), **caractérisé en ce que** le capot aval (46) est mobile, **en ce que** le mât comprend :
- au moins une articulation (54) reliant le capot aval (46) et la structure (56) et permettant au capot aval (46) d'occuper un état fermé dans lequel le capot aval (46) est en contact avec la voilure (42) et dans le prolongement du carénage amont (44) ainsi qu'un état ouvert dans lequel le capot aval (46) est distant de la voilure (42), ladite articulation (54) présentant au moins un axe de pivotement (A54) parallèle à une direction transversale et horizontale (Y),
- au moins un système de verrouillage (58) configuré pour occuper un état verrouillé dans lequel le capot aval (46) est maintenu à l'état fermé et un état déverrouillé dans lequel le capot aval (46) peut passer de l'état fermé à l'état ouvert,
et **en ce que** chaque articulation (54) comprend une tige cylindrique (60) formant l'axe de pivotement (A54) ainsi qu'une glissière (62) le long de laquelle coulisse la tige cylindrique (60) entre des première et deuxième extrémités (62.1, 62.2), la tige cylindrique (60) étant positionnée au niveau ou proche de la première extrémité (62.1) de la glissière (62) lorsque le capot aval (46) est à l'état fermé et au niveau ou proche de la deuxième extrémité (62.2) de la glissière (62) lorsque le capot aval (46) est à l'état ouvert.

2. Mât d'aéronef selon la revendication précédente, **caractérisé en ce que** la deuxième extrémité (62.2) est décalée vers le bas et/ou vers l'arrière par rapport à la première extrémité (62.1).

3. Aéronef selon la revendication précédente, **caractérisé en ce que** la liaison capot comprend deux articulations (54) symétriques par rapport à un plan médian vertical.

4. Aéronef selon l'une des revendications précédentes, **caractérisé en ce que** le système de verrouillage (58) comprend une liaison glissière (64), solidaire de la voilure (42) et/ou de la structure (56), orientée approximativement selon la direction longitudinale ainsi qu'une canne (66) qui comporte une première extrémité (66.1) se translatant le long de la liaison glissière (64) et une deuxième extrémité (66.2) pourvue d'un crochet (68) et **en ce que** le capot aval (46) comprend un point d'ancrage (70) configuré pour coopérer avec le crochet (68).

5. Aéronef selon la revendication précédente, **caractérisé en ce que** la liaison glissière (64) comprend un support (72) solidaire de la voilure (42) et/ou de la structure (56), une vis sans fin (74), au moins une liaison pivotante (76) reliant la vis sans fin (74) et le support (72), une noix (78) configurée pour se visser sur la vis sans fin (74) ainsi qu'une articulation (80) reliant la noix (78) et la première extrémité (66.1) de la canne (66).

6. Aéronef selon la revendication précédente, **caractérisé en ce que** la vis sans fin (74) présente une extrémité arrière (74.1), **en ce que** le système de verrouillage (58) comprend une commande (82) pour contrôler la liaison glissière (64), positionnée au niveau de l'extrémité arrière (74.1) de la vis sans fin (74) et **en ce que** le capot aval (46) comprend un orifice (86) au droit de la commande (82) lorsque le capot aval (46) est à l'état fermé.

7. Aéronef selon l'une des revendications précédentes, **caractérisé en ce qu'**il comprend au moins un joint d'étanchéité (52) configuré pour être comprimé entre le capot aval (46) et la voilure (42) lorsque le capot aval (46) est à l'état fermé.
